# FASCICULE DE BREVET EUROPEEN

(11) **EP 2 542 129 B1**
(45) Date de publication et mention de la délivrance du brevet: **13.08.2014**
(21) Numéro de dépôt: 11714421.2
(22) Date de dépôt: 03.03.2011
(51) Int. Cl.: A47J 31/52, A47J 31/18

(54) **DISPOSITIF D'INFUSION TEMPORISEE**
VORRICHTUNG FÜR ZEITLICH FESTGELEGTE INFUSION
DEVICE FOR TIMED INFUSION

(30) Priorité: 03.03.2010 FR 1051550
(43) Date de publication de la demande: 09.01.2013
(73) Titulaire: Phi & Tea, 74210 Faverges (FR)
(72) Inventeur: LAZARETH, Philippe, 74370 Argonay (FR)
(74) Mandataire: Poncet, Jean-François
(86) Numéro de dépôt international: PCT/IB2011/050914
(87) Numéro de publication internationale: WO 2011/107961

(56) Documents cités:
- DE-U1- 20 306 777
- US-A1- 2009 178 569

## Description

### DOMAINE TECHNIQUE DE L'INVENTION

La présente invention concerne les dispositifs permettant de préparer des boissons infusées, par exemple de type thé ou tisane.

De façon traditionnelle, on a préparé des boissons infusées en mettant la matière à infuser dans un récipient de type théière, en versant de l'eau chaude dans le récipient, puis en soutirant la boisson du récipient à travers une passoire.

En alternative, la matière à infuser peut être insérée dans une chaussette d'infusion ou dans une boule d'infusion, que l'on dispose dans le récipient.

Plus récemment, on a logé la matière à infuser dans des sachets perméables à l'eau, que l'on peut plonger dans l'eau chaude d'une tasse ou d'une théière.

Un premier inconvénient des dispositifs d'infusion connus est la difficulté pour maîtriser la durée d'infusion permettant de réaliser une qualité satisfaisante de l'infusion. En effet, on admet par exemple qu'une infusion correcte demande trois minutes environ pour le thé vert, cinq minutes environ pour le thé noir, sept minutes environ pour le thé blanc. Une durée d'infusion différente conduit soit à une infusion insuffisante si la durée est trop courte, soit à une infusion de qualité médiocre si la durée est trop longue et conduit au passage de matière indésirable dans la boisson.

L'obtention d'une infusion correcte nécessite donc de contrôler la durée d'infusion, ce qui nécessite de l'utilisateur une attention soutenue et le retrait nécessaire de la matière à infuser à l'issue de la durée d'infusion satisfaisante. Pendant ces opérations, l'utilisateur est alors perturbé dans les éventuelles autres activités qu'il voudrait entreprendre, et il est prudent qu'il attende la fin de la durée d'infusion.

Un autre inconvénient des dispositifs ci-dessus est l'obligation du retrait de la matière à infuser à l'issue de la durée d'infusion, ce qui nécessite de disposer de réceptacles appropriés pour recevoir la matière à infuser, d'autant que cette matière contient de l'eau susceptible de s'égoutter et de provoquer des taches.

Plus récemment, on a proposé une machine à thé, dans laquelle une source d'eau chaude produit un courant d'eau chaude à travers un réceptacle de matière à infuser, l'eau chargée de matière à infuser se déversant immédiatement dans une tasse. L'inconvénient d'un tel dispositif est que l'infusion n'est pas correcte, puisqu'il s'agit plutôt d'un lavage de la matière à infuser et non d'une véritable infusion.

On connaît également du document US 2009/0178569 A1, un dispositif d'infusion comprenant un conteneur à paroi muni d'une ouverture supérieure d'accès, et apte à recevoir et contenir un volume d'eau, et comprenant un compartiment d'infusion apte à recevoir et contenir une matière à infuser et à la mettre en communication avec le conteneur. La paroi du conteneur est munie d'un passage d'infusion, situé à l'écart de l'ouverture supérieure d'accès pour être noyé dans le volume d'eau. Le compartiment d'infusion est conformé pour être rapporté et fixé sur le conteneur en regard du passage d'infusion qui le met en communication avec le conteneur. Le dispositif comprend un premier clapet, apte à obturer la communication entre le compartiment d'infusion et le conteneur tant que l'eau contenue dans le conteneur n'a pas atteint une température prédéterminée pour commencer l'infusion. En fin d'infusion, un second clapet prévu dans le conteneur s'ouvre pour déverser dans un récipient extérieur le liquide infusé contenu dans le conteneur. Un tel dispositif est relativement complexe, et nécessite un récipient extérieur pour recevoir le liquide infusé.

### EXPOSE DE L'INVENTION

Le problème proposé par la présente invention est de concevoir un dispositif d'infusion permettant une maîtrise correcte de la qualité et de la durée d'infusion, sans intervention de l'utilisateur.

Simultanément, l'invention vise à éviter d'avoir recours à des conteneurs extérieurs, et à éviter les risques de taches résultant de la manipulation de matière à infuser à l'issue de la durée d'infusion.

Simultanément, l'invention vise à concevoir un tel dispositif qui permette à l'utilisateur de s'abstenir de toute opération après le lancement de l'étape d'infusion, pour entreprendre d'autres activités sans attendre la fin de la durée d'infusion.

Selon un autre objet, l'invention vise à concevoir un tel dispositif portable, pouvant être transporté dès le lancement de l'étape d'infusion, pour faciliter les autres activités de l'utilisateur.

Selon un autre objet, l'invention vise à concevoir un tel dispositif qui soit autonome, simple à utiliser, en toute sécurité.

Selon un autre objet, l'invention prévoit un tel dispositif qui présente une grande autonomie de fonctionnement, pour permettre un grand nombre d'étapes d'infusion successives sans changement ou rechargement d'une source d'énergie, et qui soit suffisamment peu onéreux pour permettre la conception de dispositifs d'infusion individuels.

Pour atteindre ces buts ainsi que d'autres, l'invention propose un dispositif d'infusion, comprenant un conteneur à paroi munie d'une ouverture supérieure d'accès, et apte à recevoir et contenir un volume d'eau, et comprenant un compartiment d'infusion apte à recevoir et contenir une matière à infuser et à la mettre en communication avec le conteneur, dans lequel :
- la paroi du conteneur est munie d'un passage d'infusion, situé à l'écart de l'ouverture supérieure d'accès pour être noyé dans le volume d'eau,
- le compartiment d'infusion est conformé pour être rapporté et fixé sur le conteneur en regard du passage d'infusion qui le met en communication avec le conteneur,
- le dispositif comprend un clapet, apte à obturer la communication entre le compartiment d'infusion et le conteneur.

Selon l'invention, le clapet est temporisé pour obturer la communication entre le compartiment d'infusion et le conteneur à l'issue d'une durée d'ouverture prédéterminée, interrompant ainsi l'infusion.

Du fait de la présence du clapet qui interrompt le passage de liquide à l'issue de la durée d'infusion correcte, l'utilisateur n'a plus à surveiller la durée d'infusion ni à retirer la matière à infuser à l'issue de cette durée. La durée est ainsi parfaitement maîtrisée. Simultanément, le risque de taches est supprimé, puisque le retrait de la matière à infuser n'est plus nécessaire pour interrompre l'infusion. Aucun récipient extérieur n'est nécessaire à l'issue de la durée d'infusion. De plus, l'utilisateur peut éventuellement transporter le dispositif avec lui pour entreprendre d'autres activités, sans avoir à attendre la fin de durée d'infusion, et sans risquer de manquer d'un réceptacle destiné à recevoir la matière à infuser à l'issue de la durée d'infusion.

En pratique, le dispositif peut avantageusement comprendre une embase et des moyens de fixation de l'embase au conteneur, l'embase comportant :
- le compartiment d'infusion, et des moyens permettant sa communication avec le passage d'infusion,
- le clapet,
- des moyens d'entraînement pour déplacer le clapet d'une position d'ouverture à une position de fermeture,
- des moyens de commande temporisée pour piloter les moyens d'entraînement et provoquer la fermeture du clapet à l'issue de la durée d'ouverture prédéterminée.

De la sorte, le conteneur lui-même présente une structure simple. Les seules adaptations à prévoir par rapport à un conteneur classique tel qu'une tasse, un bol ou un corps de théière sont la présence du passage d'infusion et de moyens d'accrochage de l'embase, de sorte que l'on peut le réaliser en diverses matières bien adaptées à la constitution de conteneurs pour boissons.

Les moyens de temporisation et de commande, réunis dans l'embase, peuvent être constitués de matériaux qui diffèrent des matériaux formant le conteneur. Ils sont relativement isolés de la source de chaleur constituée par le conteneur recevant l'eau chaude pour l'infusion.

Selon un premier mode de réalisation, le compartiment d'infusion peut être constitué par un logement ménagé dans l'embase elle-même.

Cependant, on pourra trouver avantage à prévoir un compartiment d'infusion sous forme d'une enceinte amovible à paroi perméable à l'eau, apte à être engagée dans un réceptacle de compartiment d'infusion prévu dans l'embase.

Selon une première possibilité, le compartiment d'infusion peut être une boîte à volet d'ouverture permettant l'introduction et le retrait de matière à infuser. Dans ce cas, l'utilisateur peut choisir librement la matière à infuser, par exemple choisir une matière en feuilles ou en branches.

En alternative, le compartiment d'infusion peut être une boîte fermée préfabriquée contenant une matière à infuser. Il s'agit alors d'une matière à infuser non contrôlée par l'utilisateur, comme c'est le cas dans les sachets d'infusion couramment utilisés.

Selon un premier mode de réalisation, les moyens de fixation peuvent être des moyens d'accrochage réversibles, permettant l'accrochage réversible de l'embase au conteneur. On peut avantageusement prévoir des ergots d'accrochage disposés sur l'embase et venant s'engager dans des logements de rétention correspondants prévus dans la paroi du conteneur. De la sorte, la paroi de conteneur présente une forme dépourvue d'élément dépassants et fragiles, facilitant son nettoyage ultérieur.

Bien que le passage d'infusion puisse a priori être ménagé en toutes parties de la paroi du conteneur susceptibles d'être noyées par le volume d'eau contenu dans le conteneur, on pourra trouver avantage à prévoir un passage d'infusion ménagé dans le fond du conteneur.

Dans ce cas, l'embase se fixe sur la paroi de fond du conteneur, et constitue elle-même un socle supportant le conteneur. On facilite ainsi la séparation ultérieure du conteneur et de l'embase, sans risque d'écoulement de liquide hors de l'embase lors de cette séparation.

En pratique, on peut prévoir un joint d'étanchéité périphérique interposé entre le conteneur et l'embase, apte à s'opposer à la sortie de liquide à l'interface entre le conteneur et l'embase tout en autorisant le passage de liquide dans le passage d'infusion. Cela facilite la réalisation de l'embase et du conteneur, tout en évitant l'écoulement intempestif de liquide pendant et après l'infusion.

Selon un second mode de réalisation, la paroi du conteneur peut être collée ou soudée de façon étanche selon son bord inférieur à l'embase.

Dans ce cas, l'embase et le conteneur forment un ensemble monobloc, plus simple et plus fiable.

Le clapet peut avantageusement être monté déplaçable latéralement, par rotation ou par translation, dans un logement de clapet interposé entre le compartiment d'infusion et le passage d'infusion, entre une position de retrait dans laquelle le clapet autorise le passage de liquide entre le compartiment d'infusion et le passage d'infusion, et une position d'obturation dans laquelle le clapet s'oppose au passage de liquide.

Une telle structure est particulièrement simple et peu onéreuse, compatible avec la réalisation de dispositifs individuels ou à faible capacité.

Dans une première réalisation, les moyens d'entraînement peuvent comprendre :
- des moyens élastiques de rappel, sollicitant le clapet pour le ramener en position d'obturation,
- des moyens de retenue temporisés, aptes à retenir le clapet en position de retrait à l'encontre de la sollicitation des moyens élastiques de rappel, et aptes à libérer le clapet à l'issue de la durée d'ouverture prédéterminée.

Avec une telle structure, l'utilisateur peut armer aisément le clapet lors de l'introduction de la matière à infuser dans l'embase, puis les moyens de retenue temporisés nécessitent peu d'énergie pour libérer le clapet à l'issue de la durée d'ouverture prédéterminée.

Dans ce cas, pour une réalisation avantageuse, économique, et peu consommatrice d'énergie pour obtenir une grande autonomie de fonctionnement, les moyens de retenue temporisés peuvent comprendre :
- un aimant permanent, monté fixe sur l'embase, et apte à retenir un élément ferromagnétique associé au clapet,
- une bobine de démagnétisation, apte à réduire momentanément la capacité d'attraction magnétique de l'aimant permanent pour libérer le clapet,
- une commande temporisée à source d'énergie électrique embarquée, apte à produire une impulsion électrique alimentant la bobine de démagnétisation à l'issue de la durée d'ouverture prédéterminée après un ordre de début de comptage entré par l'utilisateur actionnant un organe d'entrée.

Dans une seconde réalisation, les moyens d'entraînement peuvent comprendre un moteur électrique alimenté par une source d'alimentation électrique. Dans ce cas :
- le clapet est monté rotatif autour d'un axe excentré,
- un moteur électrique de clapet est relié mécaniquement au clapet par une transmission démultipliée à bielle, de sorte que la rotation du moteur de clapet dans un sens produit une rotation alternative du clapet entre ses positions de retrait et d'obturation,
- une commande temporisée assure l'alimentation du moteur de clapet à partir d'une source d'alimentation pour assurer l'ouverture du clapet, puis l'arrêt du moteur de clapet pour le maintien du clapet en position ouverte pendant une durée prédéterminée, puis l'alimentation du moteur de clapet à partir de la source d'alimentation pour la fermeture du clapet à l'issue de la durée prédéterminée.

Cette solution est avantageuse, en ce sens que l'utilisateur n'a pas besoin d'armer le clapet lors de l'introduction de la matière à infuser dans l'embase : le clapet est initialement en position d'obturation, retenu dans cette position par le moteur depuis l'utilisation précédente. Sur ordre de l'utilisateur, par exemple par sollicitation d'un bouton, le moteur ouvre lui-même le clapet pour débuter l'infusion.

Pour assurer un positionnement et un maintien correct du clapet dans les positions d'obturation et de retrait, on peut avantageusement prévoir des capteurs de position angulaire aptes à produire un signal transmis à la commande temporisée lorsque le clapet est en position de retrait ou en position d'obturation. A réception dudit signal, la commande temporisée interrompt l'alimentation du moteur de clapet.

L'invention prévoit en outre des moyens pour faciliter l'introduction du compartiment d'infusion dans l'embase. Pour cela, on peut avantageusement prévoir que l'embase comporte :
- une face supérieure recevant le conteneur, une face inférieure apte à reposer sur un support, et un logement d'infusion ouvert sur la face inférieure et sur la face supérieure,
- un insert d'infusion, apte à être engagé et fixé dans le logement d'infusion depuis la face inférieure, et apte à recevoir et tenir le compartiment d'infusion.

Dans le cas où le compartiment d'infusion a une section transversale relativement réduite et communique par un passage d'infusion de taille relativement réduite, il peut être avantageux de favoriser la communication de liquide entre le conteneur et le compartiment d'infusion. Pour cela, on peut avantageusement prévoir que le dispositif comprenne en outre un agitateur actionné par un moteur d'agitateur et placé dans l'insert d'infusion, pour favoriser l'échange entre le conteneur et le compartiment d'infusion pendant la durée prédéterminée d'infusion.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 illustre en perspective une vue générale d'un dispositif d'infusion temporisée selon un mode de réalisation de la présente invention ;
- la figure 2 est une vue de dessus du dispositif de la figure 1 ;
- la figure 3 est une vue en perspective éclatée montrant les éléments essentiels du dispositif de la figure 1 ;
- la figure 4 est une coupe transversale de l'embase dans le mode de réalisation des figures 1 à 3 ;
- les figures 5 et 6 illustrent, en vue de dessus, le déplacement du clapet dans l'embase du mode de réalisation des figures précédentes ;
- la figure 7 est une vue en perspective d'une enceinte amovible d'infusion selon un premier mode de réalisation ;
- la figure 8 est une vue en perspective d'une enceinte amovible d'infusion selon un second mode de réalisation ;
- la figure 9 est une vue de dessus d'un dispositif d'infusion selon un second mode de réalisation de la présente invention ;
- la figure 10 est une vue de côté en coupe diamétrale du dispositif de la figure 9 ;
- la figure 11 est une vue en perspective éclatée montrant les éléments essentiels du dispositif d'infusion selon le mode de réalisation des figures 9 et 10 ;
- la figure 12 est une vue en perspective illustrant une variante de réalisation du mode de réalisation de la figure 11 ;
- les figures 13 et 14 sont des vues en perspective d'une embase selon le mode de réalisation de la figure 11, montrant le mouvement du clapet ;
- la figure 15 est une vue en perspective éclatée illustrant les moyens de retenue temporisés dans le mode de réalisation de la figure 10 ;
- la figure 16 est une vue de côté en coupe d'un dispositif d'infusion temporisée selon un second mode de réalisation de la présente invention ;
- la figure 17 est une vue en perspective, capot d'embase enlevé, montrant les principaux organes d'actionnement du clapet dans le mode de réalisation de la figure 16 ;
- la figure 18 est une vue en perspective sous un autre angle des moyens d'entraînement mécanique du clapet ; et
- les figures 19 et 20 illustrent, en vue de dessus, une embase selon le mode de réalisation des figures 16 à 18, avec le clapet respectivement en position d'obturation et en position de retrait.

### DESCRIPTION DES MODES DE REALISATION PREFERES

Comme illustré sur les figures, un dispositif d'infusion selon la présente invention comprend, de façon générale, un conteneur 1, un compartiment d'infusion 2, et un clapet 3 temporisé.

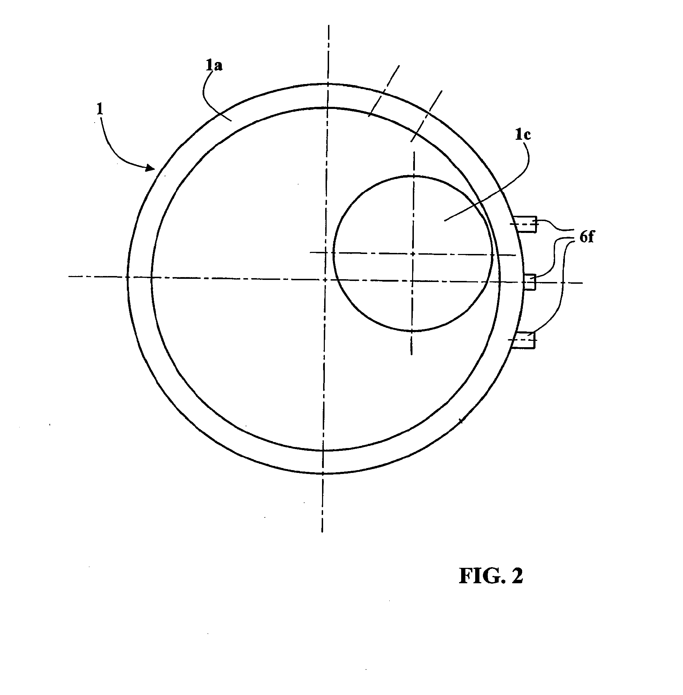

Le conteneur 1 est limité par une paroi 1 a dans laquelle sont prévus une ouverture supérieure d'accès 1b et un passage d'infusion 1c (figure 2).

Le passage d'infusion 1 c est à l'écart de l'ouverture supérieure d'accès 1b, situé dans le conteneur 1 à un niveau lui permettant d'être noyé dans un volume d'eau introduit dans le conteneur 1 lors de l'utilisation.

Le compartiment d'infusion 2 est conformé pour être rapporté et fixé sur le conteneur 1 au regard du passage d'infusion 1c, qui le met en communication avec le conteneur 1.

Le clapet 3 temporisé est structuré et disposé de façon à obturer la communication entre le compartiment d'infusion 2 et le conteneur 1 à l'issue d'une durée d'ouverture prédéterminée.

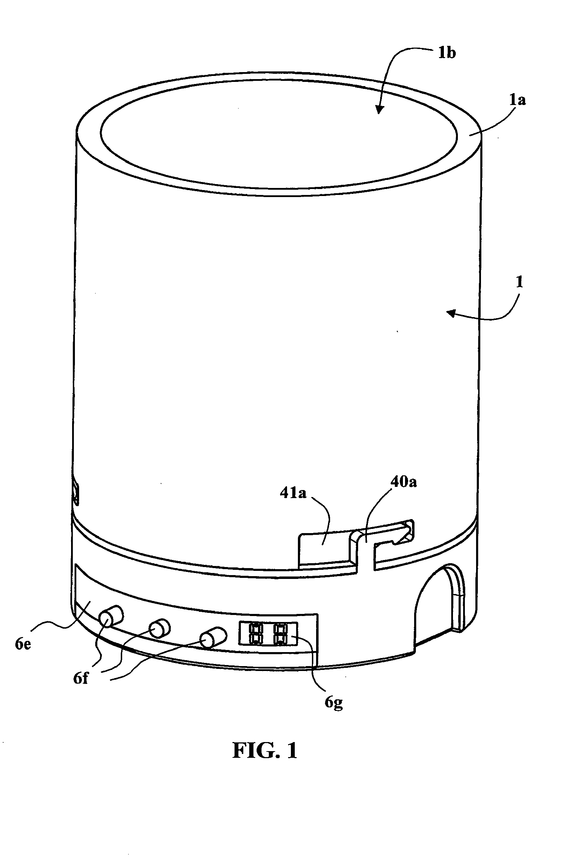

Dans le mode de réalisation plus spécifiquement illustré sur les figures 1 à 3, le dispositif d'infusion comprend une embase 4, munie de moyens d'accrochage réversibles 4a permettant l'accrochage réversible de l'embase 4 au conteneur 1.

L'embase 4 contient le compartiment d'infusion 2, sous forme d'une enceinte amovible à paroi perméable à l'eau apte à être engagée dans un réceptacle de compartiment d'infusion 4b de forme correspondante prévu dans l'embase 4.

L'embase 4 comprend un logement de clapet 4c, interposé entre, d'une part le réceptacle de compartiment d'infusion 4b recevant le compartiment d'infusion 2, et d'autre part le passage d'infusion 1c du conteneur 1.

Le clapet 3 temporisé est monté déplaçable latéralement dans le logement de clapet 4c, entre une position de retrait qui libère la communication entre le compartiment d'infusion 2 et le conteneur 1 pour le passage de liquides, et une position d'obturation dans laquelle le clapet 3 interrompt le passage de liquides entre le compartiment d'infusion 2 et le conteneur 1.

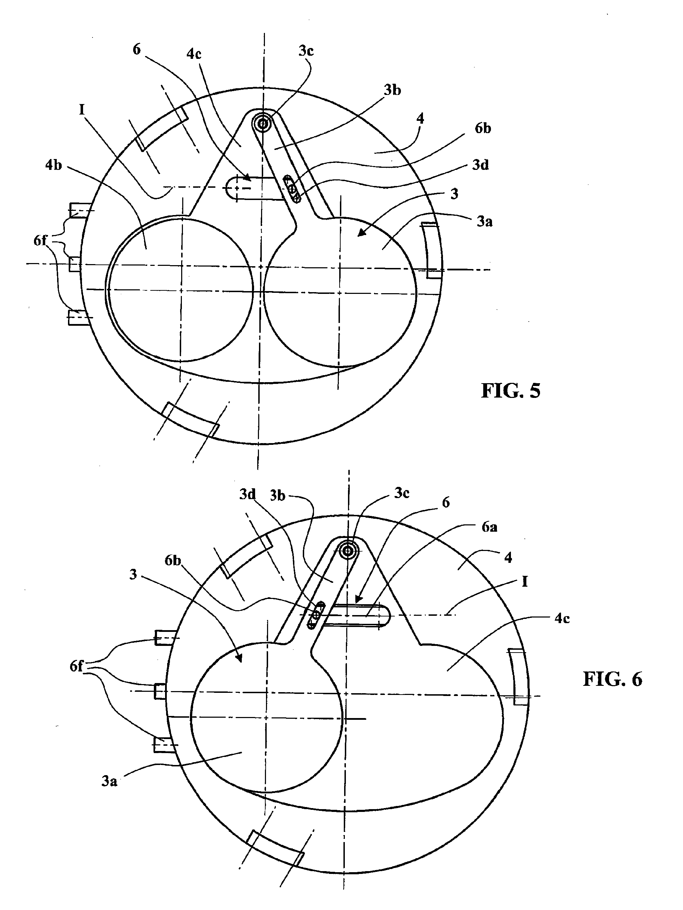

Dans un premier mode de réalisation illustré sur les figures 1 à 8, le clapet 3 est monté déplaçable par rotation. On voit mieux le mouvement de rotation en considérant les vues de dessus illustrées sur les figures 5 et 6 : sur la figure 5, le clapet temporisé 3 est en position de retrait, dans le logement de clapet 4c, laissant apparaître le réceptacle de compartiment d'infusion 4b ; sur la figure 6, le clapet 3 est en position d'obturation, occultant le réceptacle de compartiment d'infusion 4b.

En pratique, dans ce premier mode de réalisation, le clapet 3 comporte un disque obturateur 3a solidaire d'un manche 3b articulé sur un axe 3c de l'embase 4. Ainsi, le clapet 3 pivote autour de l'axe 3c, entre sa position de retrait (figure 5) et sa position d'obturation (figure 6). Il est guidé notamment par le glissement de sa face principale inférieure sur le fond du logement de clapet 4c.

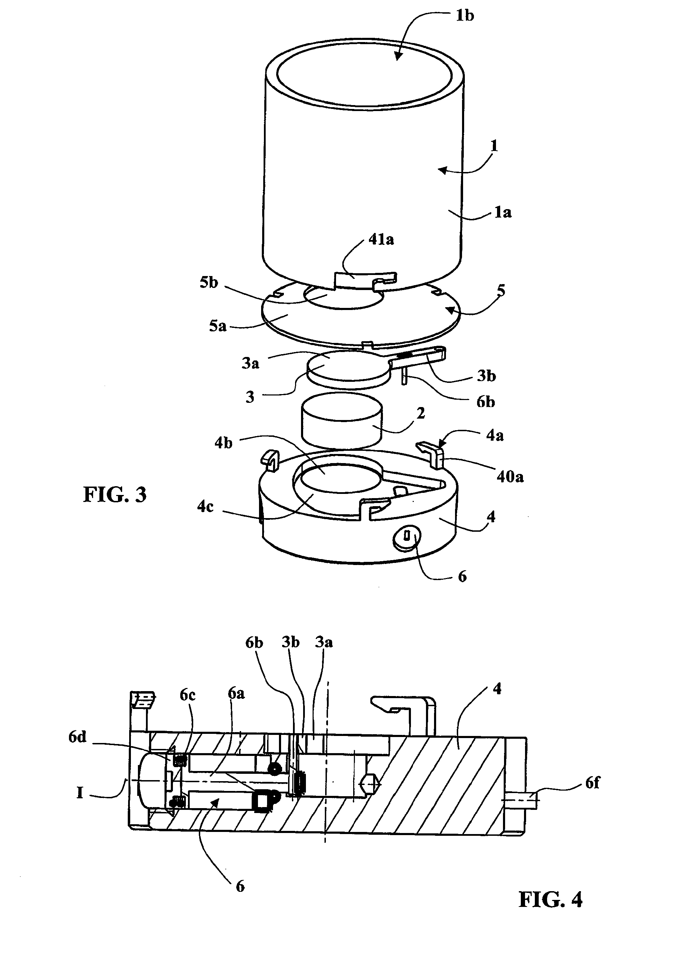

Comme on le voit sur la figure 3, un joint d'étanchéité 5, en forme de disque 5a percé d'une lumière 5b, est interposé entre l'embase 4 et le conteneur 1. Lorsque l'embase 4 est accrochée au conteneur 1, le joint d'étanchéité 5 constitue un joint périphérique apte à s'opposer à la sortie de liquide à l'interface entre le conteneur 1 et l'embase 4 tout en autorisant le passage de liquide dans le passage d'infusion 1c à travers la lumière 5b. Le joint d'étanchéité 5 participe également au guidage du clapet 3.

Des moyens d'entraînement 6 assurent le déplacement du clapet 3 depuis sa position de retrait jusqu'à sa position d'obturation.

Dans ce mode de réalisation, les moyens d'entraînement 6 sont mieux visibles sur la vue en coupe de la figure 4, à considérer en combinaison avec les figures 3, 5 et 6.

Comme on le voit sur ces figures, les moyens d'entraînement comprennent une tige d'entraînement 6a, montée à coulissement transversal selon une direction I dans l'embase 4, et couplée au clapet 3 par l'intermédiaire d'un pion de liaison 6b solidaire de la tige d'entraînement 6a et s'engageant dans une lumière oblongue 3d du manche 3b, de telle sorte que le coulissement de la tige d'entraînement 6a produise la rotation du clapet 3 autour de son axe 3c.

La tige d'entraînement 6a est sollicitée par des moyens élastiques de rappel 6c, par exemple un ressort hélicoïdal de compression, qui repousse la tige d'entraînement 6a dans sa position dans laquelle le clapet 3 est en position d'obturation (figure 6).

Des moyens de retenue temporisés 6d sont prévus pour retenir le clapet 3 et la tige d'entraînement 6a en position de retrait à l'encontre de la sollicitation des moyens élastiques de rappel 6c. A l'issue d'une durée d'ouverture prédéterminée, les moyens de retenue temporisés 6d sont aptes à libérer la tige d'entraînement 6a et donc le clapet 3 pour autoriser le déplacement du clapet 3 vers sa position d'obturation sous l'action des moyens élastiques de rappel 6c.

Comme moyens de retenue temporisés 6d, on peut utiliser par exemple un moyen d'accrochage mécanique en prise sur la tige d'entraînement 6a, avec un mécanisme de minuterie qui libère la tige d'entraînement 6a à l'issue de la durée prédéterminée.

Toutefois, selon le mode de réalisation avantageux décrit sur les figures, les moyens de retenue temporisés 6d comprennent un aimant permanent, monté fixe sur l'embase 4, par exemple la pièce référencée 6d, l'aimant étant apte à retenir la tige d'entraînement 6a qui pour cela comprend au moins une partie en matériau ferromagnétique. Pour produire la libération de la tige d'entraînement 6a, on prévoit une bobine de démagnétisation, apte à produire, lorsqu'elle est alimentée, un champ magnétique contraire à celui de l'aimant permanent 6d, pour réduire momentanément la capacité d'attraction magnétique de l'aimant permanent 6d et libérer ainsi le clapet 3.

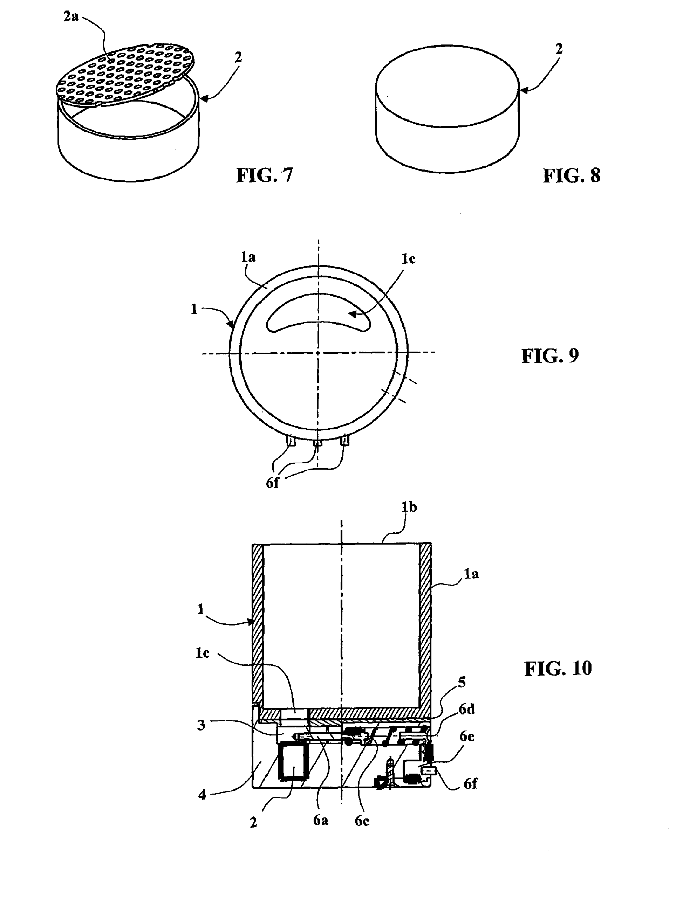

On peut maintenant se référer avantageusement à la figure 10, concernant un second mode de réalisation selon l'invention, mais illustrant les moyens pour commander la réduction momentanée de la capacité d'attraction magnétique de l'aimant permanent 6d. Il est prévu que ces moyens peuvent être utilisés dans le premier mode de réalisation des figures 1 à 8.

A cet égard, on distingue une commande temporisée 6e, munie d'une source d'énergie électrique embarquée telle qu'une pile ou une pile rechargeable, et apte à produire une impulsion électrique alimentant la bobine de démagnétisation à l'issue de la durée d'ouverture prédéterminée, après un ordre de début de comptage entré par l'utilisateur actionnant un organe d'entrée 6f.

La commande temporisée 6e, associée aux moyens de retenue temporisés 6d, forme des moyens de commande temporisée qui pilotent les moyens d'entraînement 6 et provoquent la fermeture du clapet 3 à l'issue de la durée d'ouverture prédéterminée.

En revenant au premier mode de réalisation des figures 1 à 8, on considère maintenant les figures 7 et 8, illustrant deux modes de réalisation d'un compartiment d'infusion 2.

Dans l'un et l'autre des modes de réalisation, le compartiment d'infusion 2 est une enceinte amovible, à paroi perméable à l'eau, apte à être engagée dans le réceptacle de compartiment d'infusion 4b prévu dans l'embase 4.

Dans les deux cas, le compartiment d'infusion 2 est de forme cylindrique de révolution, engagé de telle sorte que l'une de ses faces principales soit en regard du passage d'infusion 1 c.

Sur la figure 7, l'enceinte amovible constituant le compartiment d'infusion 2 est une boîte ayant un volet d'ouverture 2a percé de trous et permettant l'introduction et le retrait de matière à infuser. Le volet d'ouverture 2a constitue la face supérieure du compartiment d'infusion 2, ou face destinée à être en regard du passage d'infusion 1 c.

Sur la figure 8, l'enceinte amovible constituant le compartiment d'infusion 2 est une boîte fermée contenant une matière à infuser, un peu à la manière d'un sachet de thé préconditionné.

On considère encore le mode de réalisation des figures 1 à 8, pour distinguer les moyens d'accrochage réversibles assurant l'accrochage de l'embase 4 et du conteneur 1.

A cet égard, les moyens d'accrochage réversibles 4a comprennent des ergots d'accrochage 40a prévus sur l'embase 4 et venant s'engager dans des logements de rétention correspondants 41 a prévus dans la paroi du conteneur 1. Comme on le voit, l'accrochage se fait par un mouvement de rotation axiale de l'embase 4 sous le conteneur 1.

On considère maintenant le mode de réalisation des figures 9 à 15.

Dans ce second mode de réalisation, on retrouve les moyens essentiels du mode de réalisation des figures 1 à 8, et les mêmes moyens essentiels sont repérés par les mêmes références numériques. L'aspect extérieur général du dispositif est le même que celui représenté sur la figure 1.

Par rapport au premier mode de réalisation, les différences sont essentiellement dans la forme du compartiment d'infusion 2 et du clapet 3, et dans le mode de déplacement du clapet 3.

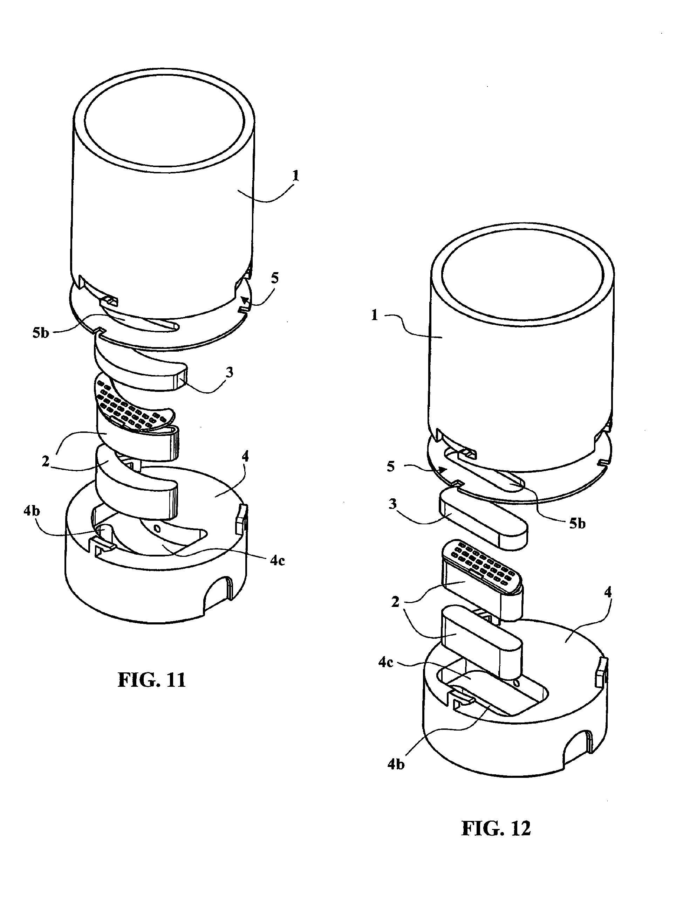

En effet, dans ce cas, comme on le voit plus clairement sur la figure 11, le compartiment d'infusion 2 a une forme en croissant, soit à paroi fermée, soit à paroi à volet d'ouverture, et il s'engage dans un réceptacle de compartiment d'infusion 4b ayant une forme correspondante en croissant.

De même, le clapet 3 est en forme de croissant, dont la section correspond sensiblement à la section du compartiment d'infusion 2, et dont la forme est également similaire de celle du passage d'infusion 1c visible sur la figure 9.

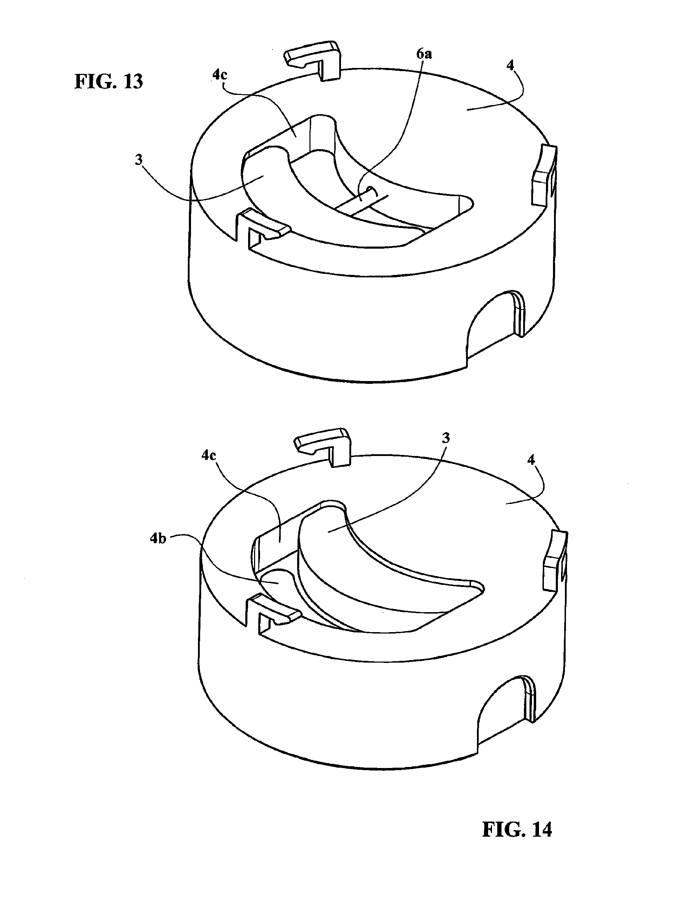

Comme on le voit sur les figures 13 et 14, le clapet 3 est déplacé par translation transversale entre ses positions d'obturation (figure 13) et de retrait (figure 14).

Sur la figure 12, une variante comprend un clapet 3 de forme oblongue, et un compartiment d'infusion 2 de forme similaire.

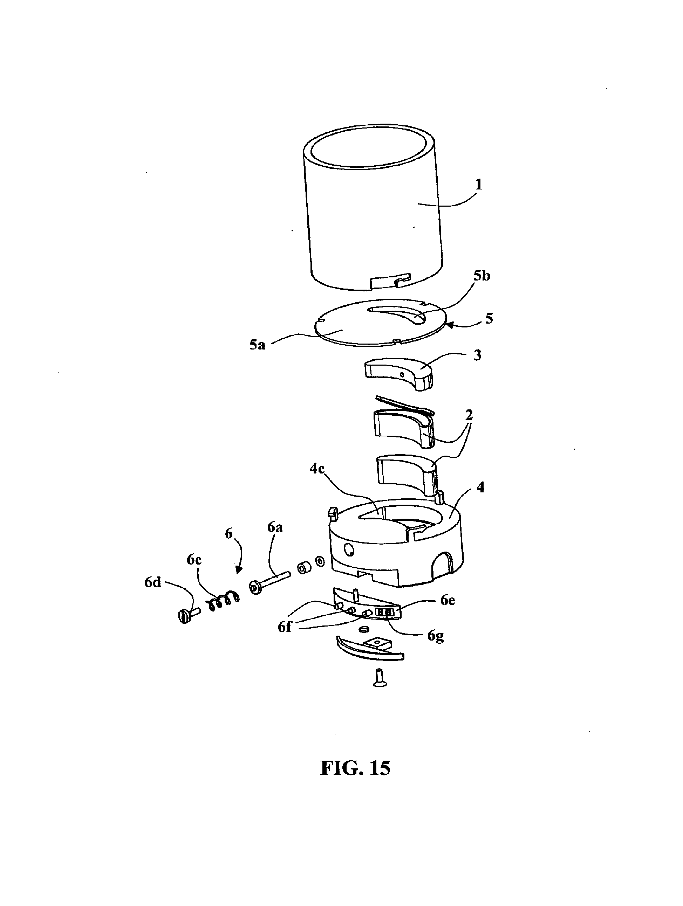

Sur la figure 15, on distingue plus en détail les moyens d'entraînement 6 et les moyens de retenue temporisés 6d, notamment la tige d'entraînement 6a, les moyens élastiques de rappel 6c, l'aimant permanent 6d et la commande temporisée 6e avec l'organe d'entrée 6f.

L'organe d'entrée 6f tel qu'illustré comporte trois boutons-poussoirs, que l'utilisateur peut solliciter sélectivement pour choisir la durée de temporisation correspondant à la matière à infuser. Un afficheur 6g confirme la durée choisie, et éventuellement l'écoulement du temps.

On comprend que la commande temporisée 6e peut être réalisée par exemple à partir d'un microcontrôleur intégré, programmé pour constituer une minuterie déclenchée par l'actionnement de l'organe d'entrée 6f, et commandant un commutateur électronique tel qu'un transistor connecté en série entre une source d'énergie électrique continue embarquée et une bobine de démagnétisation.

Le fonctionnement d'un dispositif d'infusion tel que décrit ci-dessus est simple, fiable et commode.

Initialement, supposons que le conteneur 1 est fixé à l'embase 4. L'utilisateur ôte le conteneur 1, déplace à la main le clapet 3 pour l'amener en position de retrait, ôte le compartiment d'infusion 2, ouvre ledit compartiment d'infusion 2, y introduit la matière à infuser, le referme et le place dans le réceptacle de compartiment d'infusion 4b. L'utilisateur fixe le conteneur 1 à l'embase 4. Le dispositif est alors prêt à l'usage.

Pour lancer l'infusion, l'utilisateur verse de l'eau chaude dans le conteneur 1 et simultanément sollicite l'organe d'entrée 6f pour initialiser la temporisation selon une durée appropriée. Il peut alors déplacer librement le dispositif, par exemple pour entreprendre d'autres activités, sans attendre la fin d'infusion.

Pendant l'infusion, l'eau pénètre librement dans le compartiment d'infusion 2 à travers le passage d'infusion 1 c, le clapet 3 restant en retrait. Les matières d'infusion se dispersent dans l'eau du compartiment d'infusion 2 et du conteneur 1.

A l'issue de la durée d'ouverture déterminée, le clapet 3 revient en position d'obturation, et isole donc le conteneur 1 vis-à-vis de la matière à infuser. L'infusion est terminée, et le liquide infusé présent dans le conteneur 1 est prêt à la consommation et peut attendre d'être consommé sans être altéré par une infusion persistante.

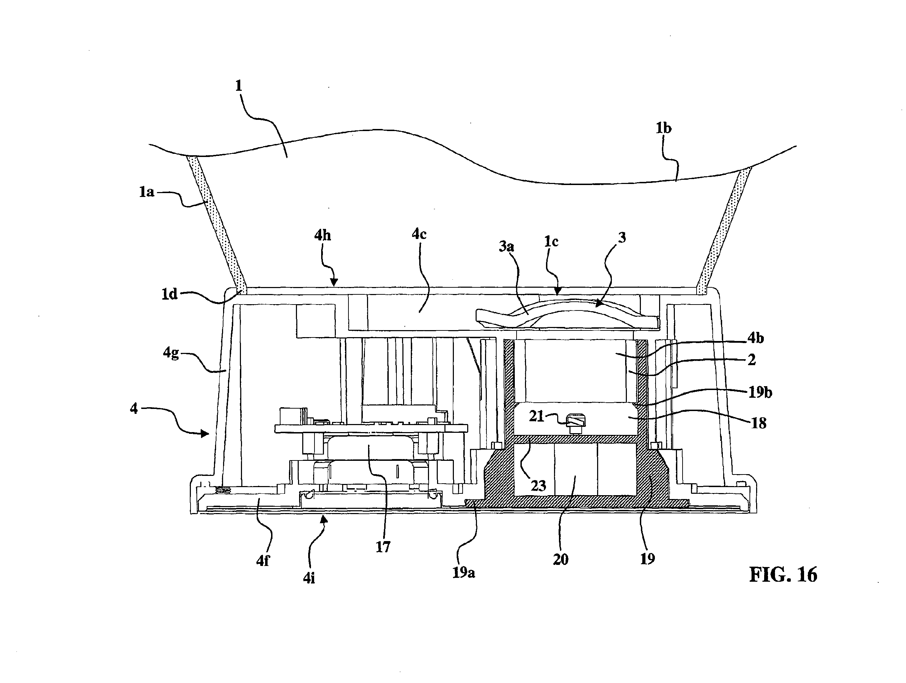

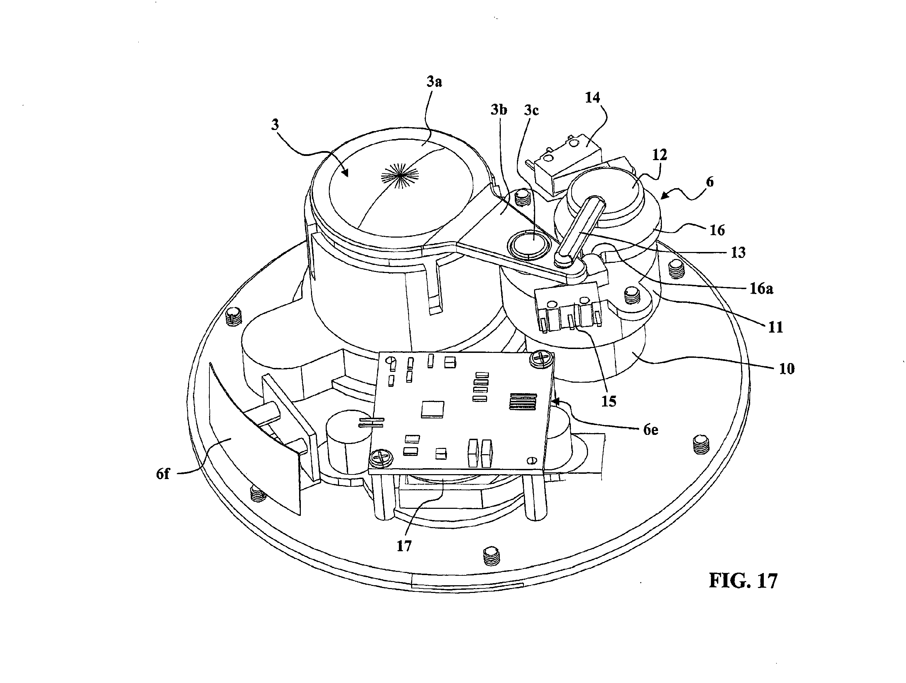

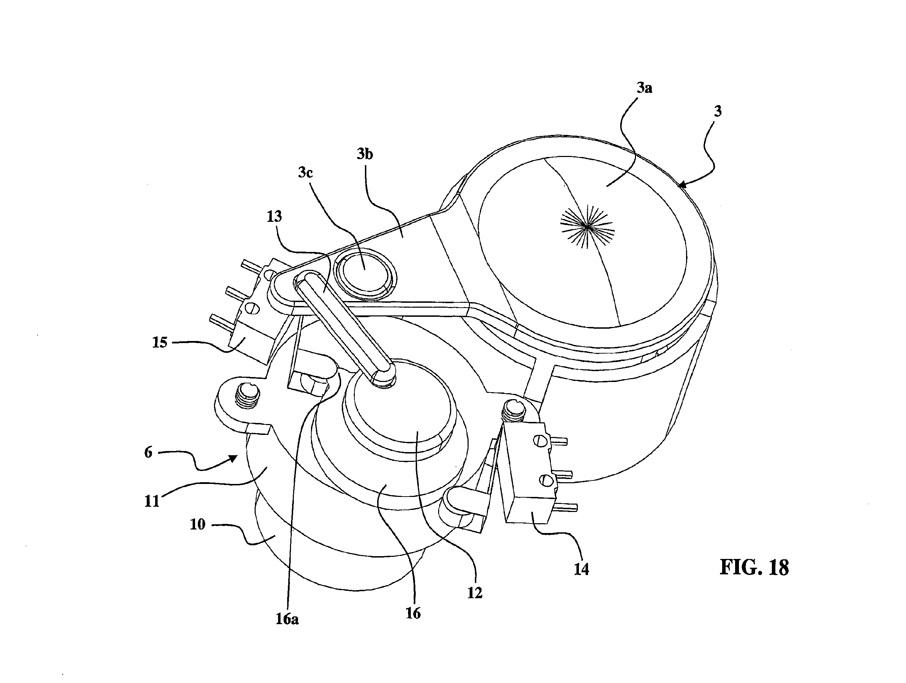

On considère maintenant le second mode de réalisation de dispositif d'infusion tel qu'illustré sur les figures 16 à 20.

Dans ce second mode de réalisation, on retrouve les moyens principaux du premier mode de réalisation des figures 1 à 15, et ces moyens sont repérés par les mêmes références numériques, à savoir : le conteneur 1, le compartiment d'infusion 2, le clapet 3, l'embase 4 avec un logement de clapet 4c et un réceptacle de compartiment d'infusion 4b, le passage d'infusion 1 c, les moyens d'entraînement 6 pour le déplacement du clapet 3 entre une position de retrait et une position d'obturation, une commande temporisée 6e, un organe d'entrée 6f.

Ce second mode de réalisation comporte des différences essentiellement dans la structure des moyens d'entraînement 6 du clapet 3, dans les moyens de logement et de manipulation du compartiment d'infusion 2, et dans les moyens pour favoriser le passage de l'infusion entre le compartiment d'infusion 2 et le conteneur 1.

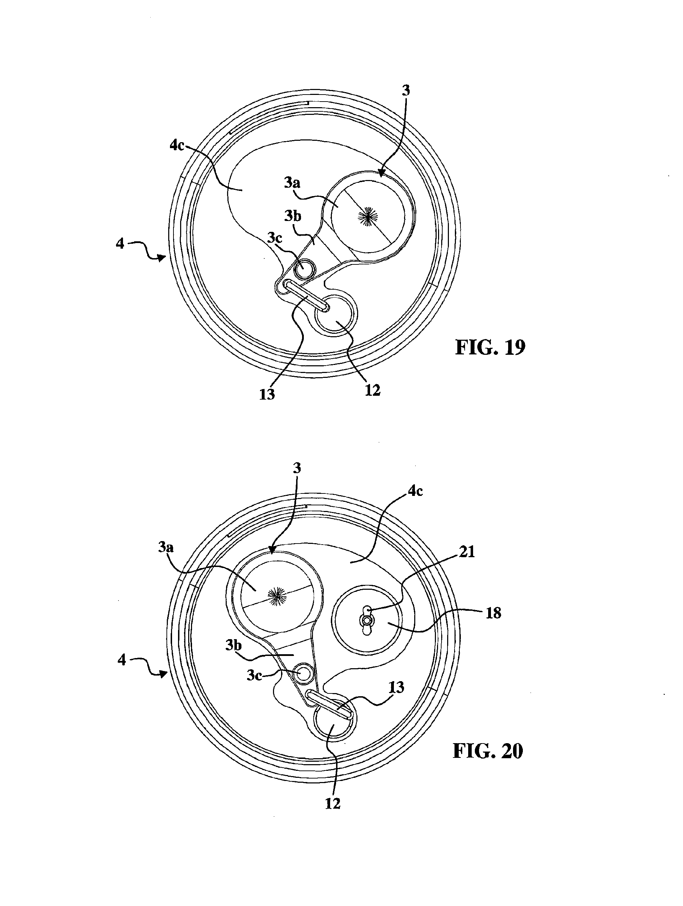

Dans ce second mode de réalisation des figures 16 à 20, le clapet 3 comporte à nouveau un disque obturateur 3a solidaire d'un manche 3b articulé sur un axe 3c excentré de l'embase 4. Ainsi, le clapet 3 pivote autour de l'axe 3c, entre sa position de retrait (figure 20) et sa position d'obturation (figure 19). Dans ce mouvement, le clapet 3 se déplace dans le logement de clapet 4c prévu dans l'embase 4.

Un moteur électrique de clapet 10 est relié mécaniquement au clapet 3 par une transmission démultipliée 11 dont le disque rotatif de sortie 12 est relié au manche 3b par une bielle 13.

De la sorte, la rotation du moteur de clapet 10 dans un même sens produit une rotation alternative du clapet 3 entre ses positions de retrait et d'obturation.

Deux capteurs de position angulaire 14 et 15, coopérant avec une came 16 à ergots 16a, produisent un signal transmis à la commande temporisée 6e lorsque le clapet 3 arrive en position de retrait ou en position d'obturation.

La commande temporisée 6e assure l'alimentation du moteur de clapet 10, à partir d'une source d'alimentation telle qu'une pile 17, pour assurer l'ouverture du clapet 3 à réception d'un ordre de fonctionnement produit par une action de l'utilisateur sur l'organe d'entrée 6f. Ensuite, la commande temporisée 6e provoque l'arrêt du moteur de clapet 10 pour le maintien du clapet 3 en position ouverte pendant une durée prédéterminée choisie pour une infusion satisfaisante. Ensuite, la commande temporisée 6e provoque l'alimentation du moteur de clapet 10 à partir de la source d'alimentation 17 pour la fermeture du clapet 3 à l'issue de la durée prédéterminée.

Dans ce second mode de réalisation des figures 16 à 20, le conteneur 1 est solidaire de l'embase 4. Pour cela, la paroi 1 a du conteneur 1 est collée ou soudée de façon étanche selon son bord inférieur 1d à l'embase 4. Plus spécialement, le conteneur 1 peut être constitué seulement d'une paroi périphérique 1 a, ouverte vers le haut et vers le bas, et c'est l'embase 4 qui forme le fond du conteneur 1. La colle ou la soudure assure l'étanchéité entre le conteneur 1 et l'embase 4.

Comme dans le mode de réalisation précédent, la commande temporisée 6e peut-être réalisée à partir d'un microprocesseur ou microcontrôleur, programmé pour exécuter les étapes mentionnées ci-dessus.

Comme on le voit sur la figure 16, l'embase 4, dans ce mode de réalisation, est formée de l'assemblage d'une plaque de base 4f et d'un corps d'embase 4g, assemblés l'un à l'autre par vissage. L'embase 4 présente une face supérieure 4h recevant le conteneur 1, et une face inférieure 4i formée par la plaque de base 4f.

Sur cette figure 16, on voit également des moyens particuliers de manipulation et de tenue du compartiment d'infusion 2. Pour cela, l'embase 4 comporte un logement d'infusion 18, ouvert sur la face inférieure 4i et sur la face supérieure 4h de l'embase 4, et dans lequel peut être engagé un insert d'infusion 19. L'insert d'infusion 19 est engagé depuis la face inférieure 4i de l'embase 4, et peut être retiré depuis cette même face inférieure 4i. Il est tenu en place à l'intérieur de l'embase 4 par un moyen de fixation tel que vissage ou baïonnette, par exemple par coopération entre son flasque de base 19a et la plaque de base 4f ou le corps d'embase 4g.

L'insert d'infusion 19 est apte à recevoir et tenir le compartiment d'infusion 2, tenu en place par exemple par des butées 19b. Il constitue ainsi le réceptacle de compartiment d'infusion 4b.

Dans ce même mode de réalisation de la figure 16, on distingue des moyens pour améliorer la diffusion de l'infusion dans le conteneur 1. A cet effet, dans la partie basse de l'insert d'infusion 19, on prévoit un moteur d'agitateur 20 entraînant un agitateur 21 au-dessous du compartiment d'infusion 2. Une paroi étanche 23, traversée de façon étanche par l'arbre de l'agitateur 21, isole le moteur d'agitateur 20 du liquide contenu dans le compartiment d'infusion 2. L'agitateur 21 peut par exemple être une petite hélice. Le moteur d'agitateur 20 peut être alimenté par la pile 17, au moyen de conducteurs électriques qui sont connectés par contact de pistes conductrices respectives prévues sur l'insert d'infusion 19 d'une part, et sur la plaque de base 4f ou le corps d'embase 4g, afin d'assurer la continuité de conduction électrique entre le moteur d'agitateur 20 et la pile 17, par l'intermédiaire de la commande temporisée 6e. En l'espèce, la commande temporisée 6e alimente le moteur d'agitateur 20 pendant tout ou partie de la durée prédéterminée d'infusion.

Le fonctionnement du dispositif d'infusion selon ce second mode de réalisation des figures 16 à 20 est légèrement différent du fonctionnement du premier mode de réalisation. Initialement, l'utilisateur enlève l'insert d'infusion 19 et place un compartiment d'infusion 2 dans l'insert d'infusion 19. Il replace l'ensemble (insert d'infusion 19-compartiment d'infusion 2) dans le logement d'infusion 18 de l'embase 4. Ensuite, l'utilisateur verse de l'eau à température appropriée dans le conteneur 1, et il actionne l'organe d'entrée 6f. Le clapet 3 s'ouvre alors, de sorte que l'eau pénètre dans le compartiment d'infusion 2 et l'infusion commence. Après une durée prédéterminée, la commande temporisée 6e referme le clapet 3 et l'infusion est donc terminée. L'utilisateur peut boire le liquide contenu dans le conteneur. Pendant l'étape d'infusion, l'agitateur 21 a brassé le liquide, ce qui favorise l'échange vers le conteneur 1.

Ainsi, pour ce fonctionnement, l'opérateur n'a pas à actionner le clapet 3 avant de placer le compartiment d'infusion 2 et de verser l'eau.

On notera que le premier mode de réalisation d'embase 4 illustré sur les figures 1 à 15 peut incorporer, sans sortir du cadre de l'invention, un conteneur 1 collé ou soudé, et/ou un insert d'infusion 19, et/ou un agitateur 21.

La présente invention n'est pas limitée aux modes de réalisation qui ont été explicitement décrits, mais elle en inclut les diverses variantes et généralisations contenues dans le domaine des revendications ci-après.

## Revendications

1. Dispositif d'infusion, comprenant un conteneur (1) à paroi (1a) munie d'une ouverture supérieure d'accès (1b), et apte à recevoir et contenir un volume d'eau, et comprenant un compartiment d'infusion (2) apte à recevoir et contenir une matière à infuser et à la mettre en communication avec le conteneur (1), dans lequel :
- la paroi (1a) du conteneur (1) est munie d'un passage d'infusion (1c), situé à l'écart de l'ouverture supérieure d'accès (1 b) pour être noyé dans le volume d'eau,
- le compartiment d'infusion (2) est conformé pour être rapporté et fixé sur le conteneur (1) en regard du passage d'infusion (1 c) qui le met en communication avec le conteneur (1),
- le dispositif comprend un clapet (3), apte à obturer la communication entre le compartiment d'infusion (2) et le conteneur (1),
**caractérisé en ce que** le clapet (3) est temporisé pour obturer la communication entre le compartiment d'infusion (2) et le conteneur (1) à l'issue d'une durée d'ouverture prédéterminée, interrompant ainsi l'infusion.

2. Dispositif d'infusion selon la revendication 1, **caractérisé en ce qu'**il comprend une embase (4) et des moyens de fixation (4a) de l'embase (4) au conteneur (1), l'embase (4) comportant :
- le compartiment d'infusion (2), et des moyens permettant sa communication avec le passage d'infusion (1c),
- le clapet (3),
- des moyens d'entraînement (6) pour déplacer le clapet (3) d'une position de retrait à une position d'obturation,
- des moyens de commande temporisée (6d, 6e) pour piloter les moyens d'entraînement (6) et provoquer la fermeture du clapet (3) à l'issue de la durée d'ouverture prédéterminée.

3. Dispositif d'infusion selon la revendication 2, **caractérisé en ce que** le compartiment d'infusion (2) est une enceinte amovible à paroi perméable à l'eau, apte à être engagée dans un réceptacle de compartiment d'infusion (4b) prévu dans l'embase (4).

4. Dispositif d'infusion selon la revendication 3, **caractérisé en ce que** le compartiment d'infusion (2) est une boîte à volet d'ouverture (2a) permettant l'introduction et le retrait de matière à infuser.

5. Dispositif d'infusion selon la revendication 3, **caractérisé en ce que** le compartiment d'infusion (2) est une boîte fermée contenant une matière à infuser.

6. Dispositif d'infusion selon l'une quelconque des revendications 2 à 5, **caractérisé en ce que** les moyens de fixation sont des moyens d'accrochage réversibles (4a) comprenant des ergots d'accrochage (40a) prévus sur l'embase (4) et venant s'engager dans des logements de rétention (41a) correspondants prévus dans la paroi (1a) du conteneur (1).

7. Dispositif d'infusion selon l'une quelconque des revendications 2 à 6, **caractérisé en ce que** le passage d'infusion (1c) est ménagé dans le fond du conteneur (1), et l'embase (4) se fixe sur la paroi de fond du conteneur (1).

8. Dispositif d'infusion selon l'une quelconque des revendications 2 à 7, **caractérisé en ce qu'**un joint d'étanchéité périphérique (5) est interposé entre le conteneur (1) et l'embase (4), apte à s'opposer à la sortie de liquide à l'interface entre le conteneur (1) et l'embase (4) tout en autorisant le passage de liquide dans le passage d'infusion (1c).

9. Dispositif d'infusion selon l'une quelconque des revendications 2 à 5, **caractérisé en ce que** la paroi (1a) du conteneur (1) est collée ou soudée de façon étanche selon son bord inférieur (1d) à l'embase (4).

10. Dispositif d'infusion selon l'une quelconque des revendications 2 à 9, **caractérisé en ce que** le clapet (3) est monté déplaçable latéralement, par rotation ou par translation, dans un logement de clapet (4c) interposé entre le compartiment d'infusion (2) et le passage d'infusion (1c), entre une position de retrait dans laquelle le clapet (3) autorise le passage de liquide entre le compartiment d'infusion (2) et le passage d'infusion (1 c), et une position d'obturation dans laquelle le clapet (3) s'oppose au passage de liquide.

11. Dispositif d'infusion selon la revendication 10, **caractérisé en ce que** les moyens d'entraînement (6) comprennent :
- des moyens élastiques de rappel (6c), sollicitant le clapet (3) pour le ramener en position d'obturation,
- des moyens de retenue temporisés (6d), aptes à retenir le clapet (3) en position de retrait à l'encontre de la sollicitation des moyens élastiques de rappel (6c), et aptes à libérer le clapet (3) à l'issue de la durée d'ouverture prédéterminée.

12. Dispositif d'infusion selon la revendication 11, **caractérisé en ce que** les moyens de retenue temporisés comprennent :
- un aimant permanent (6d), monté fixe sur l'embase (4), et apte à retenir un élément ferromagnétique (6a) associé au clapet (3),
- une bobine de démagnétisation, apte à réduire momentanément la capacité d'attraction magnétique de l'aimant permanent (6d) pour libérer le clapet (3),
- une commande temporisée (6e) à source d'énergie électrique embarquée, apte à produire une impulsion électrique alimentant la bobine de démagnétisation à l'issue de la durée d'ouverture prédéterminée après un ordre de début de comptage entré par l'utilisateur actionnant un organe d'entrée (6f).

13. Dispositif d'infusion selon la revendication 10, **caractérisé en ce que** :
- le clapet (3) est monté rotatif autour d'un axe excentré (3c),
- un moteur électrique de clapet (10) est relié mécaniquement au clapet (3) par une transmission démultipliée (11) à bielle (13), de sorte que la rotation du moteur de clapet (10) dans un sens produit une rotation alternative du clapet (3) entre ses positions de retrait et d'obturation,
- une commande temporisée (6e) assure l'alimentation du moteur de clapet (10) à partir d'une source d'alimentation (17) pour assurer l'ouverture du clapet (3), puis l'arrêt du moteur de clapet (10) pour le maintien du clapet (3) en position ouverte pendant une durée prédéterminée, puis l'alimentation du moteur de clapet (10) à partir de la source d'alimentation (17) pour la fermeture du clapet (3) à l'issue de la durée prédéterminée.

14. Dispositif d'infusion selon la revendication 13, **caractérisé en ce qu'**il comprend des capteurs de position angulaire (14, 15) aptes à produire un signal transmis à la commande temporisée (6e) lorsque le clapet (3) arrive en position de retrait ou en position d'obturation.

15. Dispositif d'infusion selon l'une quelconque des revendications 2 à 14, **caractérisé en ce que** l'embase (4) comporte :
- une face supérieure (4h) recevant le conteneur (1), une face inférieure (4i) apte à reposer sur un support, et un logement d'infusion (18) ouvert sur la face inférieure (4i) et sur la face supérieure (4h),
- un insert d'infusion (19), apte à être engagé et fixé dans le logement d'infusion (18) depuis la face inférieure (4i), et apte à recevoir et tenir le compartiment d'infusion (2).

16. Dispositif d'infusion selon l'une quelconque des revendications 1 à 14, **caractérisé en ce qu'**il comprend en outre un agitateur (21) actionné par un moteur d'agitateur (20) et placé dans l'insert d'infusion (19), pour favoriser l'échange entre le conteneur (1) et le compartiment d'infusion (2) pendant la durée prédéterminée d'infusion.

## Patentansprüche

1. Aufgussvorrichtung, umfassend einen Behälter (1), der eine Wand (1a) mit einer oberen Zugangsöffnung (1b) hat und dazu dient, eine Wassermenge aufzunehmen und zu halten, sowie ein Infusionsabteil (2), das dazu dient, eine aufzugießende Substanz aufzunehmen und diese mit dem Behälter (1) in Verbindung zu bringen, wobei:
- die Wand (1a) des Behälters (1) eine Infusionsdurchtrittsöffnung (1c) hat, die fern von der oberen Zugangsöffnung (1b) angeordnet ist, so dass sie sich in der Wassermenge befindet,
- das Infusionsabteil (2) so ausgebildet ist, dass es an dem Behälter (1) gegenüber der Infusionsdurchtrittsöffnung (1c), die das Infusionsabteil (2) mit dem Behälter (1) verbindet, eingesetzt und fixiert werden kann,
- die Vorrichtung eine Klappe (3) zum Verschließen der Verbindung zwischen dem Infusionsabteil (2) und dem Behälter (1) aufweist,
**dadurch gekennzeichnet, dass** die Klappe (3) zeitgesteuert ist, wodurch die Verbindung zwischen dem Infusionsabteil (2) und dem Behälter (1) nach Ablauf einer vorbestimmten Öffnungsdauer geschlossen und so der Aufgussvorgang unterbrochen wird.

2. Aufgussvorrichtung nach Anspruch 1, **dadurch gekennzeichnet, dass** sie ein Basisorgan (4) mit Mitteln (4a) zu seiner Befestigung an dem Behälter (1) aufweist, wobei das Basisorgan (4) umfasst:
- das Infusionsabteil (2) sowie Mittel für dessen Verbindung mit der Infusionsdurchtrittsöffnung (1c),
- die Klappe (3),
- Antriebsmittel (6) zum Verstellen der Klappe (3) aus einer Rückzugsstellung in eine Verschlussstellung,
- Zeitsteuerungsmittel (6d, 6e) für die Ansteuerung der Antriebsmittel (6) und die Einleitung der Verschlussbewegung der Klappe (3) nach Ablauf der vorbestimmten Öffnungsdauer.

3. Aufgussvorrichtung nach Anspruch 2, **dadurch gekennzeichnet, dass** das Infusionsabteil (2) aus einem abnehmbaren Fach mit wasserdurchlässiger Wand besteht, das in einen in dem Basisorgan (4) Infusionsabteils Sitz (4b) einsetzbar ist.

4. Aufgussvorrichtung nach Anspruch 3, **dadurch gekennzeichnet, dass** das Infusionsabteil (2) aus einer Dose mit Öffnungsklappe (2a) besteht, die ein Einfüllen und Leeren der Aufgusssubstanz ermöglicht.

5. Aufgussvorrichtung nach Anspruch 3, **dadurch gekennzeichnet, dass** das Infusionsabteil (2) aus einer geschlossenen Dose besteht, die die Aufgusssubstanz aufnimmt.

6. Aufgussvorrichtung nach einem der Ansprüche 2 bis 5, **dadurch gekennzeichnet, dass** die Befestigungsmittel aus reversierbaren Verriegelungselementen (4a) mit an dem Basisorgan (4) angebrachten Haken (40a) bestehen, die in entsprechende Haltesitze (41 a) eingreifen, welche in der Wand (1a) des Behälters (1) ausgebildet sind.

7. Aufgussvorrichtung nach einem der Ansprüche 2 bis 6, **dadurch gekennzeichnet, dass** die Infusionsdurchtrittsöffnung (1c) in den Boden des Behälters (1) eingearbeitet ist, und dass das Basisorgan (4) an der Bodenwand des Behälters (1) fixiert ist.

8. Aufgussvorrichtung nach einem der Ansprüche 2 bis 7, **dadurch gekennzeichnet, dass** zwischen den Behälter (1) und das Basisorgan (4) eine umlaufende Dichtung (5) eingesetzt ist, die ein Austreten von Flüssigkeit durch die Fuge zwischen Behälter (1) und Basisorgan (4) verhindert und dabei die Infusionsdurchtrittsöffnung (1c) für die Flüssigkeit freilässt.

9. Aufgussvorrichtung nach einem der Ansprüche 2 bis 5, **dadurch gekennzeichnet, dass** die Wand (1a) des Behälters (1) an seinem unteren Rand (1d) dicht mit dem Basisorgan (4) verlötet oder verklebt ist.

10. Aufgussvorrichtung nach einem der Ansprüche 2 bis 9, **dadurch gekennzeichnet, dass** die Klappe (3) durch Drehung oder Verschiebung seitlich verstellbar in einem Klappensitz (4c) zwischen dem Infusionsabteil (2) und der Infusionsdurchtrittsöffnung (1c) gelagert ist, und zwar zwischen einer Rückzugsstellung, in der die Klappe (3) den Übertritt für die Flüssigkeit zwischen Infusionsabteil (2) und Infusionsdurchtrittsöffnung (1c) freigibt, und einer Verschlussstellung, in der die Klappe (3) den Flüssigkeitsdurchlass sperrt.

11. Aufgussvorrichtung nach Anspruch 10, **dadurch gekennzeichnet, dass** die Antriebsmittel (6) zur Klappenverstellung umfassen:
- elastische Rückstellmittel (6c), die die Klappe (3) so beaufschlagen, dass diese in die Verschlussstellung zurückgeführt wird,
- zeitgesteuerte Haltemittel (6d), die die Klappe (3) gegen die Wirkung der Kraft der elastischen Rückstellmittel (6c) in ihrer Rückzugsstellung halten und die Klappe (3) nach einer vorbestimmten Öffnungsdauer freigeben.

12. Aufgussvorrichtung nach Anspruch 11, **dadurch gekennzeichnet, dass** die zeitgesteuerten Haltemittel umfassen:
- einen Permanentmagneten (6d), der an dem Basisorgan (4) fest angebracht ist und dazu dient, ein der Klappe (3) zugeordnetes Ferromagnetelement (6a) zu halten,
- eine Entmagnetisierungsspule, die dazu dient, die magnetische Anziehungskapazität des Permanentmagneten (6d) momentan zu reduzieren, um die Klappe (3) freizugeben,
- eine Zeitschaltsteuerung (6e) mit eingebauter elektrischer Energiequelle zur Erzeugung eines elektrischen Impulses für die Entmagnetisierungsspule nach Ablauf einer vorbestimmten Öffnungsdauer, die aufgrund eines Anfangszählbefehls durch Betätigen eines Eingabeorgans (6f) durch den Benutzer gewählt wird.

13. Aufgussvorrichtung nach Anspruch 10, **dadurch gekennzeichnet, dass**:
- die Klappe (3) um eine exzentrische Achse (3c) drehbar gelagert ist,
- ein elektrischer Klappenmotor (10) mechanisch mit der Klappe (3) über ein Untersetzungsgetriebe (11) mit Pleuelstange (13) so verbunden ist, dass die vom Klappenmotor (10) erzeugte Drehung in einer Richtung eine alternierende Drehung der Klappe (3) zwischen ihren beiden Stellungen des Rückzugs und des Verschlusses erzeugt,
- ein Zeitschaltbefehl (6e) die Versorgung des Klappenmotors (10) von einer Energiequelle (17) bewirkt, um die Öffnung der Klappe (3) und darauf den Stopp des Klappenmotors (10) herbeizuführen, wodurch die Klappe (3) während einer vorbestimmten Zeitdauer in der Öffnungsstellung gehalten und anschließend der Klappenmotor (10) von der Energiequelle (17) eingeschaltet wird, wodurch nach Ablauf der vorbestimmten Öffnungsdauer die Klappe (3) schließt.

14. Aufgussvorrichtung nach Anspruch 13, **dadurch gekennzeichnet, dass** diese Winkelpositionssensoren (14, 15) aufweist, die ein an die Zeitschaltsteuerung (6e) weitergegebenes Signal erzeugen, sobald die Klappe (3) ihre Rückzugsstellung oder ihre Öffnungsstellung erreicht.

15. Aufgussvorrichtung nach einem der Ansprüche 2 bis 14, **dadurch gekennzeichnet, dass** das Basisorgan (4) umfasst:
- eine Oberseite (4h) für die Aufnahme des Behälters (1), eine Unterseite (4i) zur Abstützung auf einem Tragorgan sowie eine Infusionsaufnahme (18), die auf der Unterseite (4i) und auf der Oberseite (4h) offen ist,
- einen Infusionseinsatz (19), der so ausgebildet ist, dass er in die Infusionsaufnahme (18) an deren Unterseite (4i) eingreift und dort fixiert ist, und der das Infusionsabteil (2) aufnimmt und hält.

16. Aufgussvorrichtung nach einem der Ansprüche 1 bis 14, **dadurch gekennzeichnet, dass** diese ein von einem Motor (20) angetriebenes Rührorgan (21) aufweist, das in den Infusionseinsatz (19) eingreift, um während der vorbestimmten Infusionsdauer den Austausch zwischen dem Behälter (1) und dem Infusionsabteil (2) zu begünstigen.

## Claims

1. Infusion device, comprising a container (1) with wall (1a) provided with a top access opening (1b), and suitable for receiving and containing a volume of water, and comprising an infusion compartment (2) suitable for receiving and containing a substance to be infused and for connecting it with the container (1), in which:
- the wall (1a) of the container (1) is provided with an infusion passage (1c), situated away from the top access opening (1b) to be submerged in the volume of water,
- the infusion compartment (2) is configured to be added and fixed to the container (1) facing the infusion passage (1c) which connects it with the container (1),
- the device comprises a valve (3), suitable for blocking the connection between the infusion compartment (2) and the container (1),
**characterised in that** the valve (3) is timed to block the connection between the infusion compartment (2) and the container (1) at the end of a predetermined opening time, thus stopping the infusion.

2. Infusion device according to claim 1, **characterised in that** it comprises a base (4) and means (4a) for fixing the base (4) to the container (1), the base (4) comprising:
- the infusion compartment (2), and means enabling its connection with the infusion passage (1c),
- the valve (3),
- driving means (6) for moving the valve (3) from a retracted position to a blocking position,
- timed control means (6d, 6e) for controlling the driving means (6) and provoking the closure of the valve (3) at the end of the predetermined opening time.

3. Infusion device according to claim 2, **characterised in that** the infusion compartment (2) is a removable chamber with water-permeable wall, suitable for being fitted in an infusion compartment receptacle (4b) provided in the base (4).

4. Infusion device according to claim 3, **characterised in that** the infusion compartment (2) is a box with opening flap (2a) allowing the substance to be infused to be introduced and removed.

5. Infusion device according to claim 3, **characterised in that** the infusion compartment (2) is a sealed box containing a substance to be infused.

6. Infusion device according to any one of claims 2 to 5, **characterised in that** the fixing means are reversible attachment means (4a) comprising attachment snugs (40a) provided on the base (4) and fitting into corresponding retention recesses (41a) provided in the wall (1a) of the container (1).

7. Infusion device according to any one of claims 2 to 6, **characterised in that** the infusion passage (1c) is formed in the bottom of the container (1), and the base (4) is fixed to the bottom wall of the container (1).

8. Infusion device according to any one of claims 2 to 7, **characterised in that** a peripheral seal (5) is interposed between the container (1) and the base (4), suitable for opposing the outlet of liquid at the interface between the container (1) and the base (4) while allowing the passage of liquid into the infusion passage (1c).

9. Infusion device according to any one of claims 2 to 5, **characterised in that** the wall (1a) of the container (1) is glued or welded in a seal-tight manner on its bottom edge (1d) to the base (4).

10. Infusion device according to any one of claims 2 to 9, **characterised in that** the valve (3) is mounted to be able to move laterally, by rotation or by translation, in a valve seat (4c) interposed between the infusion compartment (2) and the infusion passage (1c), between a retracted position in which the valve (3) allows the passage of liquid between the infusion compartment (2) and the infusion passage (1c), and a blocking position in which the valve (3) opposes the passage of liquid.

11. Infusion device according to claim 10, **characterised in that** the driving means (6) comprise:
- elastic return means (6c), stressing the valve (3) to return it to the blocking position,
- timed retaining means (6d), suitable for retaining the valve (3) in the retracted position against the stress of the elastic return means (6c), and suitable for releasing the valve (3) at the end of the predetermined opening time.

12. Infusion device according to claim 11, **characterised in that** the timed retaining means comprise:
- a permanent magnet (6d) permanently mounted on the base (4), and suitable for retaining a ferromagnetic element (6a) associated with the valve (3),
- a degaussing coil, suitable for temporarily reducing the magnetic attraction capability of the permanent magnet (6d) to release the valve (3),
- a timed control (6e) with embedded electrical energy source, suitable for producing an electrical pulse powering the degaussing coil at the end of the predetermined opening time after a count start command entered by the user actuating an input member (6f).

13. Infusion device according to claim 10, **characterised in that**:
- the valve (3) is mounted to rotate about an eccentric axis (3c),
- an electric valve motor (10) is mechanically linked to the valve (3) by a geared-down transmission (11) with connecting rod (13) such that the rotation of the valve motor (10) in one direction produces an alternating rotation of the valve (3) between its retracted and blocking positions,
- a timed control (6e) provides the power supply for the valve motor (10) from a power source (17) to ensure the opening of the valve (3), then the stopping of the valve motor (10) to hold the valve (3) in the open position for a predetermined time, then the power supply for the valve motor (10) from the power source (17) for the closure of the valve (3) at the end of the predetermined time.

14. Infusion device according to claim 13, **characterised in that** it comprises angular position sensors (14, 15) suitable for producing a signal transmitted to the timed control (6e) when the valve (3) arrives in the retracted position or in the blocking position.

15. Infusion device according to any one of claims 2 to 14, **characterised in that** the base (4) comprises:
- a top face (4h) receiving the container (1), a bottom face (4i) suitable for resting on a support, and an infusion recess (18) open on the bottom face (4i) and on the top face (4h),
- an infusion insert (19), suitable for fitting and fixing in the infusion recess (18) from the bottom face (4i), and suitable for receiving and holding the infusion compartment (2).

16. Infusion device according to any one of claims 1 to 14, **characterised in that** it also comprises a stirring apparatus (21) actuated by a stirring apparatus motor (20) and placed in the infusion insert (19), to promote the exchange between the container (1) and the infusion compartment (2) for the predetermined infusion time.
